# EUROPEAN PATENT APPLICATION

(11) **EP 1 873 638 A1**
(43) Date of publication of application: **02.01.2008**
(21) Application number: 07111256.9
(22) Date of filing: 28.06.2007
(51) Int. Cl.: G06F 9/445

(54) **Portable apparatus supporting multiple operating systems and supporting method therefor**

(30) Priority: 29.06.2006 KR 20060059527
(71) Applicant: LG Electronics Inc., Seoul 150-721 (KR)
(72) Inventor: Kim, Wha Young, Seongdong-gu 133-070, Seoul City (KR)
(74) Representative: Vossius & Partner

(57) **Abstract**

The present invention relates to a portable apparatus supporting multiple operating systems and a supporting method therefor. The portable apparatus of the present invention comprises according to an embodiment a plurality of operating systems, and BIOSs corresponding to the operating systems to boot the corresponding operating system. The portable apparatus comprises an operating system selection unit for selecting any one of the operating systems. The portable apparatus comprises a preprocessing BIOS for transferring booting right to the BIOS corresponding to the operating system selected by the operating system selection unit. The portable apparatus comprises a memory which is loaded with the corresponding BIOS that takes over the booting right from the preprocessing BIOS and the operating system booted by the corresponding BIOS. The preprocessing BIOS and the BIOS for booting the operating system are loaded in different regions of the memory in order to prevent over writing. In this manner, since there is independently provided the BIOS in correspondence to each operating system, an operating system can be stably booted using an appropriate BIOS corresponding to the operating system desired to be used.

## Description

The present invention relates to a portable apparatus, and more particularly, to a portable apparatus supporting multiple operating systems and a supporting method therefor, wherein a variety of operating systems can be used according to a preprocessing basic input output system (BIOS) function.

Generally, a portable apparatus includes a central processing unit (CPU), a main memory, an auxiliary memory, and input and output devices. The main memory includes a random access memory (RAM) for storing execution programs and data needed while executing the programs, and a read only memory (ROM) for storing system programs. The ROM stores a booting program, i.e., BIOS, which is executed in the first place when power is applied to the portable apparatus. In order to perform a power on self test (POST, an optional function) for checking abnormality for hardware devices constituting the portable apparatus and to boot the operating system, the booting program performs a function that initializes each of components constituting the portable apparatus. In addition, the booting program performs a booting process for executing the operating system stored in the auxiliary memory or the main memory.

If the portable apparatus configured as described above is powered on or reset, the central processing unit executes the BIOS stored in the boot ROM. The BIOS initializes the hardware components and performs the POST. Then, if no error occurs during the POST, the operating system stored in the auxiliary memory or the main memory is booted. On the other hand, if an error occurs, an error message is output and execution of the BIOS is terminated.

As described above, it is general in the portable apparatus that one operating system is booted by one BIOS. Accordingly, in a case where a different operating system is required depending on a working characteristic or a user, a portable apparatus that is provided with only one operating system cannot satisfy such a requirement. Accordingly, a variety of multi-booting techniques have been introduced so that a plurality of operating systems can be used in a portable apparatus.

The operating procedure of a conventional method for supporting multiple operating systems will be described. An existing operating system and related data stored in a boot memory are backed up in a storage medium. Then, an operating system image desired by a user is downloaded through a wired or wireless interface and stored into the boot memory, and the operating system desired by the user is executed through system rebooting.

The related art described above has a problem in that a process of backing up an existing operating system stored and related data in the boot memory and storing a new operating system in the boot memory is required. Further, there is also a problem in that the portable apparatus needs to be rebooted.

In order to solve the problems of the related art described above, a method for supporting multiple operating systems has been proposed, in which a variety of operating systems can be used without rebooting the portable apparatus and backing up data. In the proposed method, operating systems different from the existing operating system are stored in a peripheral device, and the peripheral device that stores an operating system desired to be used is connected and used. In addition, since data of the operating system stored in the peripheral device are also stored, together with the operating system, in the peripheral device where the operating system is stored, the process of backing up the data of the existing operating system is not needed. Further, since only the peripheral device that stores the operating system desired by the user is connected through a corresponding interface and the corresponding operating system is booted through a specific command, the portable apparatus is not rebooted.

In the method for supporting multiple operating systems described above, one BIOS manages booting of a plurality of operating systems. Accordingly, if update of a corresponding function of the bootstrap loader or the BIOS for any one of the plurality of operating systems is required, update of the BIOS is required. At this time, if power of the portable apparatus is stopped from being supplied, all data are lost and thus booting cannot be performed normally.

Furthermore, if one BIOS manages booting of a plurality of operating systems, it can be difficult to boot normally due to collision between the size of the operating system image supported by the BIOS and the size of the operating system image desired to be used. That is, there is a problem in that it is difficult to use an appropriate function of the BIOS according to the operating system.

Accordingly, the present invention is conceived to solve the aforementioned problems in the related art. An object of the present invention is to provide a portable apparatus supporting multiple operating systems and a supporting method therefor, wherein each operating system has an independent BIOS, and booting is performed after booting right is transferred to a corresponding BIOS in the preprocessing BIOS step depending on selection of an operating system.
Another object of the present invention is to provide a portable apparatus supporting multiple operating systems, wherein an appropriate corresponding BIOS is independently provided for each operating system, and thus when update of a BIOS is required, only the corresponding BIOS needs to be update.

According to an aspect of the present invention for achieving the objects, there is provided a portable apparatus supporting multiple operating systems, comprising: a plurality of operating systems; BIOSs corresponding to the operating systems; a selection unit for selecting any one of the operating systems; and a preprocessing BIOS for loading a memory with the corresponding BIOS to boot the operating system selected by the selection unit.

At this time, the preprocessing BIOS may load the BIOS according to a boot flag or operation of the selection unit.

In addition, the operating systems and the BIOSs may be stored in a storage medium detachably mounted to the portable apparatus.

At this time, the storage medium may include a compact disk (CD), universal serial bus (USB) memory, compact flash (CF) memory, or secure digital (SD) memory.

Further, the memory may be divided into a preprocessing BIOS region and a BIOS region to prevent over writing.

In the meantime, according to another aspect of the present invention, there is provided a portable apparatus supporting multiple operating systems, comprising: a memory unit for storing a preprocessing BIOS; a control unit for executing the preprocessing BIOS; an operating system selection unit for selecting any one of a plurality of operating systems; and a storage unit for storing the plurality of operating systems and a plurality of BIOSs corresponding to the plurality of operating systems.

At this time, the preprocessing BIOS may load the BIOS corresponding to the operating system selected by the operating system selection unit.

In addition, the BIOS may be loaded by detecting a boot flag value or by user's operation.

Further, the memory unit may be divided into a preprocessing BIOS region and a BIOS region.

In the meantime, according to a further aspect of the present invention, there is provided a portable apparatus supporting multiple operating systems, comprising: a memory unit for storing a preprocessing BIOS; a control unit for executing the preprocessing BIOS; an operating system selection unit for selecting any one of a plurality of operating systems; a storage unit for storing the plurality of operating systems; and a storage medium for storing a plurality of BIOSs corresponding to the plurality of operating systems.

At this time, the storage medium may be detachably mounted to the portable apparatus according to user's selection.

In addition, the storage medium may include a CD, USB memory, CF memory, or SD memory.

Meanwhile, according to a still further aspect of the present invention, there is provided a portable apparatus supporting multiple operating systems, comprising: a memory unit for storing a preprocessing BIOS; a control unit for selecting any one of a plurality of operating systems by executing the preprocessing BIOS; and a storage medium for storing the plurality of operating systems and a plurality of BIOSs corresponding to the plurality of operating systems.

Here, the storage medium may be detachably mounted to the portable apparatus according to user's selection.

In the meantime, according to a still further aspect of the present invention, there is provided a method for supporting multiple operating systems of a portable apparatus, comprising the steps of: loading a preprocessing BIOS by a control unit; selecting any one of a plurality of operating systems; transferring booting right to a BIOS corresponding to the selected operating system; and booting the selected operating system by the BIOS.

At this time, the operating system may be selected by operating a button or key implemented in hardware or selected through an operating system selection program implemented in software.

In addition, the step of transferring booting right to a BIOS corresponding to the selected operating system may be performed by causing the preprocessing BIOS to load a BIOS corresponding to the selected operating system.

Further, the preprocessing BIOS may load the BIOS by detecting a boot flag value or by user's operation.

The above and other features and advantages of the present invention will become apparent from the following description of preferred embodiments given in conjunction with the accompanying drawings, in which:

Fig. 1 is a block diagram illustrating a portable apparatus supporting multiple operating systems according to a preferred embodiment of the present invention;

Fig. 2 is an view illustrating an example of memory use of a preprocessing BIOS and first and second BIOSs according to the present invention; and

Fig. 3 is a flowchart illustrating, step by step, a method for supporting the multiple operating systems according to the present invention.

Hereinafter, a portable apparatus supporting multiple operating systems and a method therefor according to the present invention will be described in detail with reference to preferred embodiments shown in the accompanying drawings.

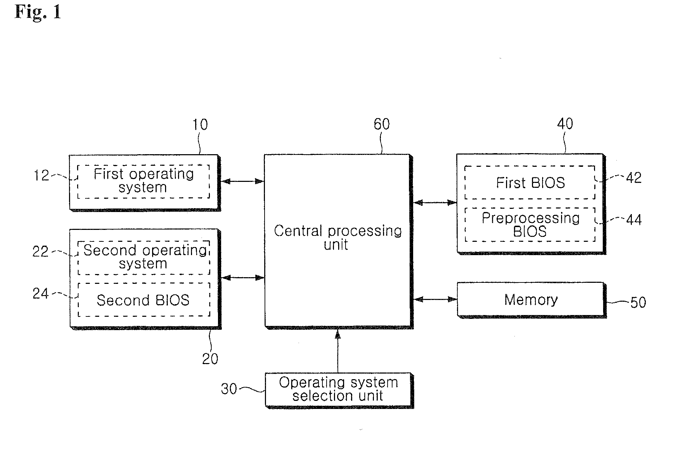

The configuration of the portable apparatus supporting multiple operating systems according to a preferred embodiment of the present invention will be described in detail with reference to Fig. 1.

The portable apparatus according to the present invention is provided with a first storage unit 10 for storing a first operating system 12 and a second storage unit 20 for storing one or more second operating systems 22. The first storage unit 10 is a storage device, such as a hard disk or flash memory, installed within a main body, and serves to store application programs and a variety of data, as well as the first operating system 12. The second storage unit 20 stores the second operating systems 22 different from the first operating system 12, and second BIOSs 24, which correspond to the respective second operating systems 22 to boot the corresponding operating systems. Here, the second storage unit 20 may be a portable storage device detachably mounted to the portable apparatus, such as a USB memory, CF memory, or SD memory. The second BIOS 24 includes a booting program for copying the second operating system 22 stored in the second storage unit 20 to a memory 50 or for executing the second operating system.

Next, there is provided an operating system selection unit 30 for selecting any one of the first operating system 12 and the second operating systems 22. The operating system selection unit 30 is implemented in hardware, such as a button or key, or in software.

In addition, there is provided a first BIOS 42 for booting the first operating system 12 and a preprocessing BIOS 44 for transferring booting right to the BIOS 42 or 24 corresponding to an operating system selected by the operating system selection unit 30. The preprocessing BIOS 44 detects an input signal according to user's operation and a boot flag value of the second operating system, and transfers booting right to one of the first and second BIOSs 42 and 24. Here, the first BIOS 42 and the preprocessing BIOS 44 are stored in ROM 40. The first BIOS 42 and the preprocessing BIOS 44 can exist as a single program.

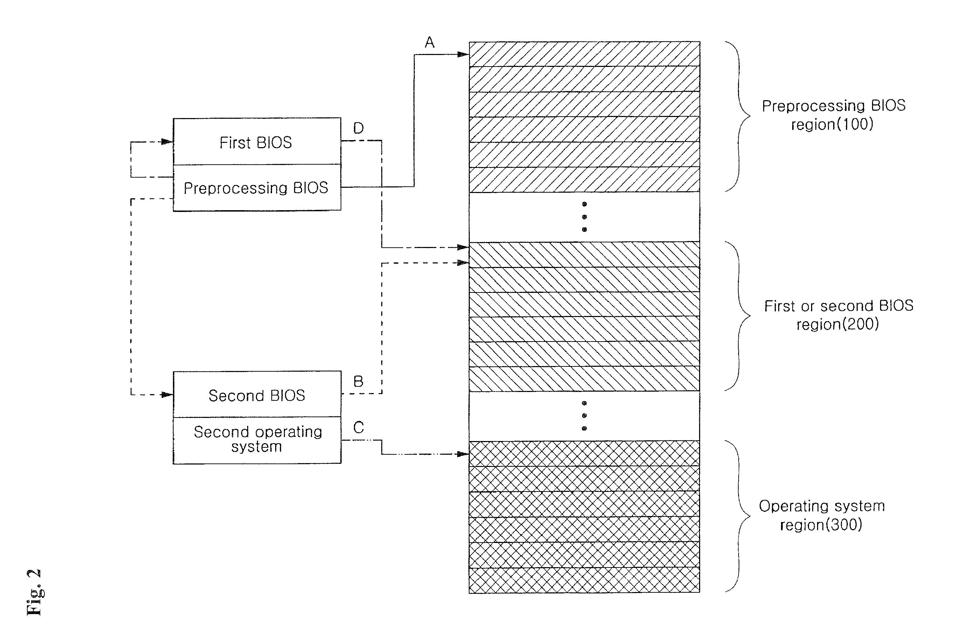

There is provided the memory 50 which is loaded with the operating system selected by the operating system selection unit 30. The memory 50 is a place where a program is executed, wherein the memory 50 is loaded with the preprocessing BIOS 44 by a central processing unit 60 if power is supplied to the portable apparatus. The first or second BIOS 42 or 24 is loaded by the preprocessing BIOS 44. At this time, the region, which is loaded with the preprocessing BIOS 44 and the first or the second BIOS 42 or 24, is divided into a preprocessing BIOS region 100, a first or second BIOS region 200, and an operating system region 300 as shown in Fig. 2 in order to prevent over writing.

In addition, there is provided with the central processing unit 60 for accessing and executing the preprocessing BIOS 44 stored in the ROM 40 when the portable apparatus is supplied with power.

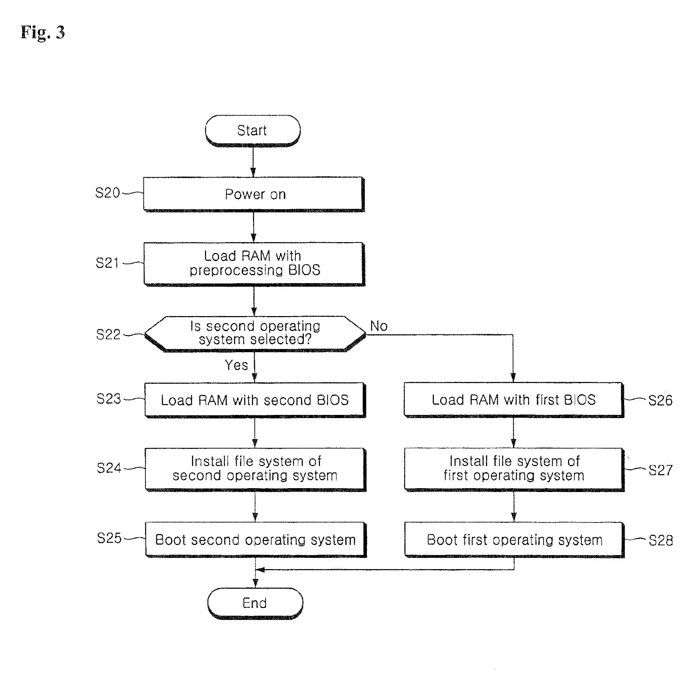

Hereinafter, a method for supporting multiple operating systems according to the present invention having the configuration described above will be described step by step in detail with reference to Figs. 2 and 3.

If the portable apparatus is supplied with power or reset, the central processing unit 60 loads the preprocessing BIOS 44 in the memory 50, as shown by arrow A in Fig.2, (steps S20 and S21). At this time, the central processing unit 60 provides a starting address of the memory 50 which is loaded with the preprocessing BIOS 44. Next, the preprocessing BIOS 44 copies itself to the preprocessing BIOS region (the region 100 shown in Fig. 2) pointed by the starting address and then executes itself. Here, the preprocessing BIOS 44 initializes the central processing unit and the platform at the preprocessing BIOS region 100 of the memory 50 and then checks peripheral devices.

Then, among the first operating system 12 and the second operating systems 22, desired one to be used is selected by a user in step S22. Here, the user selects an operating system by operating a button or key implemented in hardware or through an operating system selection program implemented in software.

If one of the second operating systems 22 is selected in step S22, the preprocessing BIOS 44 provides the second BIOS 24 with the starting address of a region that is loaded with the second BIOS 24. Next, the second BIOS 24 copies itself to the second BIOS region 200 of the memory 50 pointed by the address, as shown by arrow B in Fig.2, (step S23). Here, the preprocessing BIOS 44 detects an input signal according to the user's button operation and then transfers booting right to the second BIOS 24, or detects a boot flag value of the second operating system 22 that is changed through the operating system selection program and then transfers booting right to the corresponding second BIOS 24. For example, if among DOS, Linux, Windows NT and UNIX stored in the second storage unit 20, Linux is selected, the value of a corresponding boot flag of the operating system is changed from 0 to 1, and the preprocessing BIOS 44 detects the change of the corresponding boot flag and transfers booting right to the corresponding BIOS.

Next, the second BIOS 24 installs a file system of the second operating system, accesses the second operating system 22 stored in the second storage unit 20, loads the operating system region 300 of the memory 50 with the second operating system, as shown by arrow C in Fig. 2, and then boots the second operating system (steps S24 and S25). Alternatively, after jumping to the address of the second operating system 22 stored in the second storage unit 20, the second BIOS boots the second operating system 22 from the second storage unit 20.

On the other hand, if the second operating system is not selected in step 22, the preprocessing BIOS 44 transmits an address of the memory 50 where the first BIOS 42 stored in the ROM 40 copies and loads itself. Next, the first BIOS copies itself to the first BIOS region 200 of the memory 50 pointed by the address, as shown by arrow D in Fig. 2, and then executes itself (step S26). Next, the first BIOS 42 installs a file system of the first operating system 12 and boots the first operating system 12 stored in the first storage unit 10 in the same manner as described above (steps S27 and S28).

In the preferred embodiment of the present invention described above, only a method of booting an operating system that is selected when the portable apparatus initially starts to operate is described. However, even after an operating system is booted, the operating system can be changed into an operating system desired to be used. That is, if the user selects an operating system desired to be used, the preprocessing BIOS 44 detects the selection and allows the selected operating system to be booted by a corresponding BIOS.

Meanwhile, in the preferred embodiment of the present invention described above, only a case where the first BIOS is stored in the ROM is described. However, according to a second embodiment of the present invention, the first BIOS can be stored in the first storage unit 10 together with the first operating system 12. In addition, the first BIOS 42 and the second BIOS 24 can be stored in the same storage unit 10 or 20, together with the first operating system 12 and the second operating system 22.

In the meantime, according to a third embodiment of the present invention, the first BIOS 42 and the second BIOS 24 can be stored in a storage medium that is detachably mounted to the portable apparatus according to a user's selection, or all of a plurality of operating systems and a plurality of BIOSs corresponding to the plurality of operating systems can be stored in the storage medium. That is, in the third embodiment of the present invention, the storage medium detachably mounted to the portable apparatus is provided. Either the plurality of BIOSs or the plurality of operating systems and the plurality of BIOSs corresponding to the plurality of operating systems can be stored in the storage medium.

The storage medium includes a CD, USB memory, CF memory, or SD memory.

In the meantime, according to a fourth embodiment of the present invention, the portable apparatus can comprise a control unit for selecting any one of a plurality of operating systems by executing the preprocessing BIOS 44. That is, in the fourth embodiment of the present invention, differently from the other embodiments, the portable apparatus is provided with no operating system selection unit, but can be provided with the control unit that selects any one of a plurality of operating systems.

In this manner, since in the present invention, a BIOS corresponding to an operating system is independently provided and a corresponding BIOS appropriate to a desired operating system is used, functions of an appropriate corresponding BIOS can be used according to the operating system.

The scope of the present invention is not limited to the embodiments described and illustrated above but those skilled in the art can make various modifications and changes thereto within the scope of the invention defined by the claims.

In the portable apparatus supporting multiple operating systems and the supporting method therefor according to the present invention described above in detail, the following advantages can be expected.

First, since a BIOS corresponding to each operating system is independently provided, an operating system can be booted using an appropriate corresponding BIOS according to the operating system.

Further, since a BIOS independently performs its function for each operating system, if update of a BIOS is required, only the corresponding BIOS needs to be update. Thus the updated corresponding BIOS need not be separately stored in a boot ROM.

## Claims

1. A portable apparatus for supporting multiple operating systems, comprising:
a plurality of operating systems;
basic input output systems (BIOSs) corresponding to the operating systems;
a selection unit for selecting any one of the operating systems; and
a preprocessing BIOS for loading a memory with the corresponding BIOS to boot the operating system selected by the selection unit.

2. The apparatus as claimed in claim 1, wherein the preprocessing BIOS loads the BIOS according to a boot flag or operation of the selection unit.

3. The apparatus as claimed in claim 1 or 2, wherein the operating systems and the BIOSs are stored in a storage medium detachably mounted to the portable apparatus.

4. The apparatus as claimed in claim 3, wherein the storage medium includes a compact disk (CD), a universal serial bus (USB) memory, a compact flash (CF) memory, or a secure digital (SD) memory.

5. The apparatus as claimed in any of claims 1 to 4, wherein the memory is divided into a preprocessing BIOS region and a BIOS region to prevent over writing.

6. A portable apparatus for supporting multiple operating systems, comprising:
a memory unit for storing a preprocessing basic input output system (BIOS);
a control unit for executing the preprocessing BIOS;
an operating system selection unit for selecting any one of a plurality of operating systems; and
a storage unit for storing the plurality of operating systems and a plurality of BIOSs corresponding to the plurality of operating systems.

7. The apparatus as claimed in claim 6, wherein the preprocessing BIOS loads the BIOS corresponding to the operating system selected by the operating system selection unit.

8. The apparatus as claimed in claim 7, wherein the BIOS is loaded by detecting a boot flag value or by a user's operation.

9. The apparatus as claimed in claim 6 or 7, wherein the memory unit is divided into a preprocessing BIOS region and a BIOS region.

10. A portable apparatus for supporting multiple operating systems, comprising:
a memory unit for storing a preprocessing basic input output system (BIOS);
a control unit for executing the preprocessing BIOS;
an operating system selection unit for selecting any one of a plurality of operating systems;
a storage unit for storing the plurality of operating systems; and
a storage medium for storing a plurality of BIOSs corresponding to the plurality of operating systems.

11. The apparatus as claimed in claim 10, wherein the storage medium is detachably mounted to the portable apparatus according to a user's selection.

12. The apparatus as claimed in claim 10 or 11, wherein the storage medium includes a CD, a USB memory, a CF memory, a or SD memory.

13. A portable apparatus for supporting multiple operating systems, comprising:
a memory unit for storing a preprocessing basic input output system (BIOS);
a control unit for selecting any one of a plurality of operating systems by executing the preprocessing BIOS; and
a storage medium for storing the plurality of operating systems and a plurality of BIOSs corresponding to the plurality of operating systems.

14. The apparatus as claimed in claim 13, wherein the storage medium is detachably mounted to the portable apparatus according to a user's selection.

15. A method for supporting multiple operating systems of a portable apparatus, comprising:
loading a preprocessing basic input output system (BIOS) by a control unit;
selecting any one of a plurality of operating systems;
transferring booting right to a BIOS corresponding to the selected operating system; and
booting the selected operating system by the BIOS.

16. The method as claimed in claim 15, wherein the operating system is selected by operating a button or key implemented in hardware or selected through an operating system selection program implemented in software.

17. The method as claimed in claim 15 or 16, wherein the step of transferring the booting right to the BIOS is performed by causing the preprocessing BIOS to load a BIOS corresponding to the selected operating system.

18. The method as claimed in claim 17, wherein the preprocessing BIOS loads the BIOS by detecting a boot flag value or by a user's operation.

19. The method as claimed in any of claims 15 to 18, wherein the preprocessing BIOS and the plurality of operating systems are stored in two separate memories.

20. The method as claimed in any of claims 15 to 19, wherein in the loading step, the preprocessing BIOS is loaded to a first region of a memory, and the selected operating system and the corresponding BIOS are loaded in other regions of the memory.
